(19)

Europäisches Patentamt
European Patent Office
Office européen des brevets

(11) **EP 4 224 931 A1**

(12) **EUROPEAN PATENT APPLICATION**
published in accordance with Art. 153(4) EPC

(43) Date of publication:
**09.08.2023 Bulletin 2023/32**

(21) Application number: **21876036.1**

(22) Date of filing: **29.09.2021**

(51) International Patent Classification (IPC):
*H04W 36/00* (2009.01)        *H04W 36/30* (2009.01)
*H04W 16/28* (2009.01)

(52) Cooperative Patent Classification (CPC):
**H04W 16/28; H04W 36/00; H04W 36/30**

(86) International application number:
**PCT/KR2021/013359**

(87) International publication number:
**WO 2022/071761 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020 KR 20200127534**

(71) Applicant: **LG ELECTRONICS INC.
Yeongdeungpo-gu
Seoul 07336 (KR)**

(72) Inventors:
• **CHUNG, Jaehoon
  Seoul 06772 (KR)**

• **KANG, Jiwon
  Seoul 06772 (KR)**
• **LEE, Youngdae
  Seoul 06772 (KR)**
• **KIM, Hongsuk
  Seoul 06772 (KR)**
• **KIM, Seonwook
  Seoul 06772 (KR)**

(74) Representative: **Frenkel, Matthias Alexander
  Wuesthoff & Wuesthoff
  Patentanwälte PartG mbB
  Schweigerstraße 2
  81541 München (DE)**

(54) **METHOD AND DEVICE FOR TRANSMITTING/RECEIVING MEASUREMENT INFORMATION IN WIRELESS COMMUNICATION SYSTEM**

(57)     Disclosed are a method and device for transmitting measurement information in a wireless communication system. The method for a terminal transmitting measurement information, according to one embodiment of the present disclosure, comprises the steps of: receiving, from a base station, at least one measurement object (MO) and reporting event-related configuration information; and, on the basis that the reporting event has been triggered, transmitting measurement information related to the at least one MO to the base station, wherein a criterion for triggering the reporting event may be set on the basis of a layer 1(L 1)-measurement value.

FIG.7

```
┌─────────────────────────────────────────────────────────────┐
│ RECEIVING CONFIGURATION INFORMATION RELATED TO AT            │ ─── S710
│ LEAST ONE MEASUREMENT OBJECT (MO) AND A REPORTING EVENT      │
└─────────────────────────────────────────────────────────────┘
                              │
                              ▼
┌─────────────────────────────────────────────────────────────┐
│ BASED ON THE REPORTING EVENT BEING TRIGGERED, TRANSMITTING   │ ─── S720
│ MEASUREMENT INFORMATION ON THE AT LEAST ONE MO              │
└─────────────────────────────────────────────────────────────┘
```

**Description**

[Technical field]

The present disclosure relates to a wireless communication system, and more particularly, to a method and apparatus for transmitting and receiving measurement information in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for transmitting measurement information.

In addition, an additional technical object of the present disclosure is to provide a method and apparatus for transmitting measurement information according to a condition based on a first layer (layer 1, L1)-measured value in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for transmitting measurement information by a user equipment (UE) in a wireless communication system according to an aspect of the present disclosure may include receiving, from a base station, configuration information related to at least one measurement object (MO) and a reporting event; and based on the reporting event being triggered, transmitting, to the base station, measurement information for the at least one MO, and a condition for triggering the reporting event is configured based on an L1(layer 1)-measurement value.

A method for transmitting measurement information by a user equipment (UE) in a wireless communication system according to an aspect of the present disclosure may include transmitting, to a user equipment (UE), configuration information related to at least one measurement object (MO) and a reporting event; and based on the reporting event being triggered, receiving, to the UE, measurement information for the at least one MO, and a condition for triggering the reporting event is configured based on an L1(layer 1)-measurement value.

[Technical Effects]

According to an embodiment of the present disclosure, a method and apparatus for transmitting measurement information in a wireless communication system may be provided.

According to an embodiment of the present disclosure, a method and apparatus for transmitting measurement information according to a condition based on a first layer (layer 1, L1) measurement value in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing an operation of transmitting measurement information of a terminal according to an embodiment of the present disclosure.
FIG. 8 is a diagram for describing an operation of receiving measurement information of a base station according to an embodiment of the present disclosure.
FIG. 9 is a diagram for describing a signaling procedure of a network side and a terminal according to an embodiment of the present disclosure.
FIG. 10 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.
In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network (5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel

- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

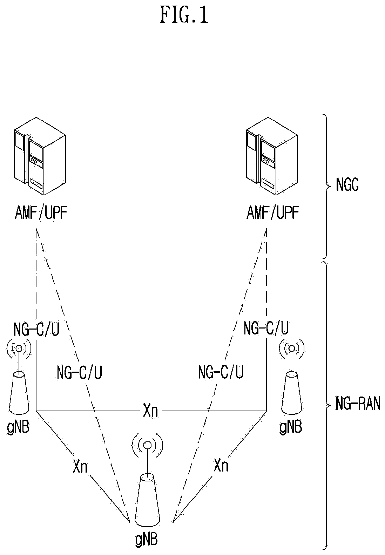

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

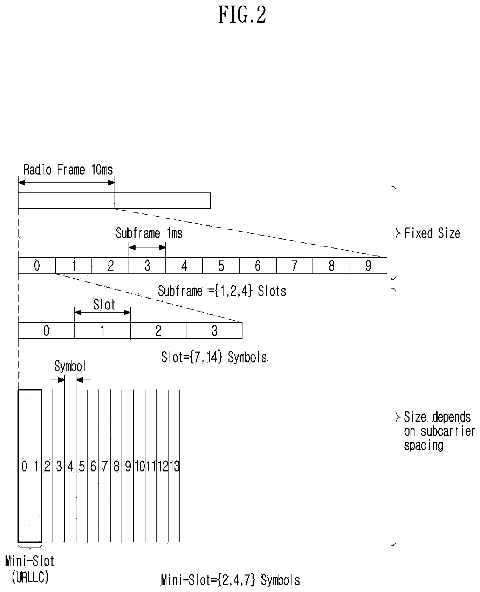

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |

(continued)

| μ | Δf=2^μ·15 [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2) . FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c$=10ms. Here, a radio frame is configured with 10 subframes having a duration of $T_{sf}=(\Delta f_{max}N_f/1000) \cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0, ..., N_{slot}^{subframe,\mu}-1\}$ in a subframe and are numbered in an increasing order of $n_{s,f}^\mu \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

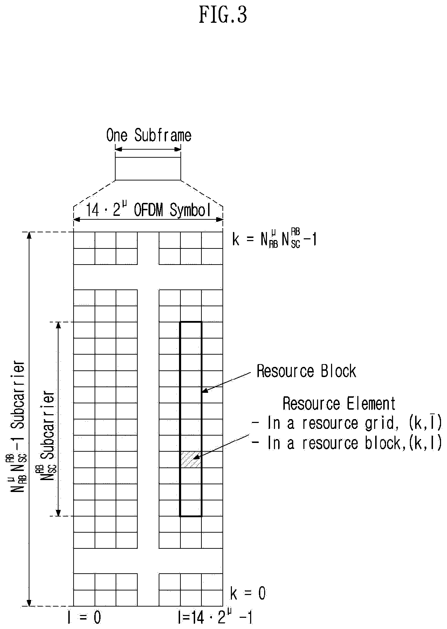

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

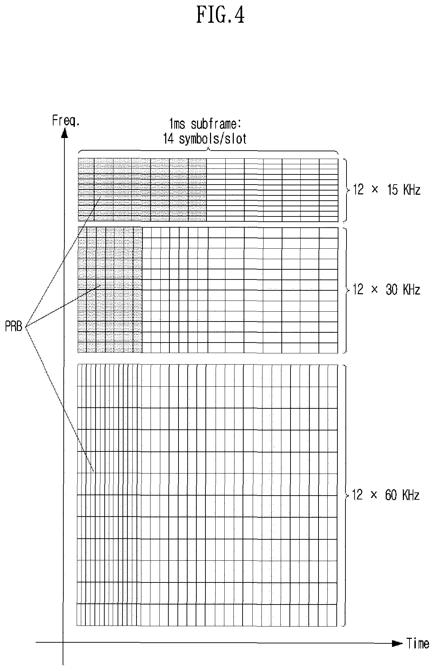

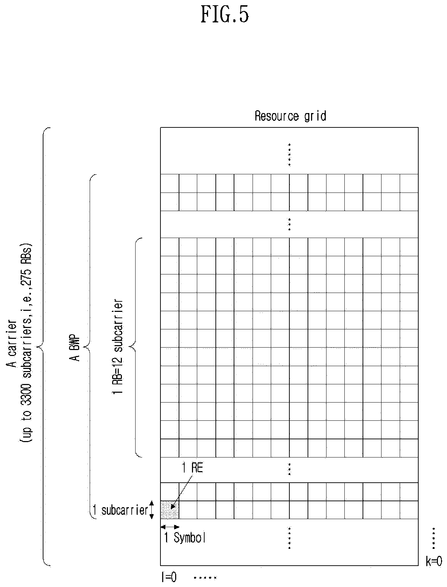

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

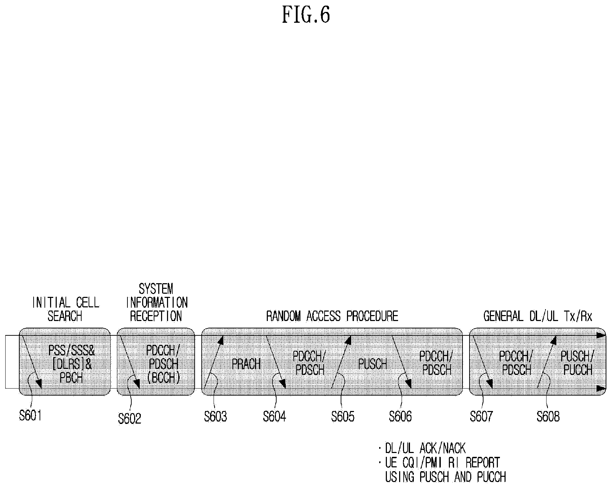

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Handover (HO) procedure

In a wireless communication system to which the present disclosure may be applied, when the channel state between the user equipment (UE) and the specific cell deteriorates or the movement of the terminal is detected while the UE is accessing a specific cell and receiving service, the base station may determine whether to perform handover in order to change the serving cell of the UE.

That is, in order to manage the mobility of the UE or the channel state of the cell to which the UE is connected, the base station may determine whether to perform handover for changing the serving cell of the UE based on measurement information reported by the UE (i.e., measurement reporting information). When it is determined by the base station to perform handover, the UE may perform a handover procedure.

A method of determining whether or not to perform handover by the base station and a method of performing a handover procedure by the UE may be performed as described below.

First, the base station may transmit measurement configuration information to the UE so that the UE (in RRC_connected mode) may perform a measurement reporting operation. Here, the measurement configuration information may include radio resource control (RRC) information including an object to perform a measurement operation by the UE (i.e., a measurement object (MO)) and configuration information related to the measurement object.

For example, the measurement configuration information may include MO-related configuration information, reporting configuration information, a measurement ID, and quantity configuration information.

Here, the measurement configuration information may be included in a radio resource control (RRC) reconfiguration message. The RRC reset message is a command message for modifying configuration information related to the RRC connection for the UE. The RRC reconfiguration message may include measurement configurations, mobility control, radio resource configurations, and access stratum (AS) security configurations.

The UE may transmit an RRC reconfiguration complete message to the base station as a response to the RRC reconfiguration message received from the base station. The RRC reconfiguration complete message is a message transmitted from the UE to the base station to inform that the reconfiguration of the RRC connection has been successfully completed.

MO indicates an object to be measured within the same frequency (i.e., intra-frequency) or between frequencies (i.e., inter-frequency). For example, MO may indicate the time and frequency location of an SS/PBCH block or CSI-RS resource to be measured.

One or several report configuration information (e.g., ReportConfigNR IE) may be configured per MO. The reporting configuration information may include reporting condition/criteria for reporting the measurement result (e.g., layer 3 (L3)-based signal quality (e.g., RSRP, RSRQ, or SINR, etc.)) derived based on the RS (e.g., synchronization signal (SS), SSB, or CSI-RS) for the MO (s) to the base station.

For example, the ReportConfigNR IE may specify a trigger condition such as a measurement report event or conditional handover (CHO) or conditional primary secondary cell (PSCell) change (CPC). For the following events (e.g., A1, A2, ...), the measurement report event and CHO or CPC event may be based on the cell measurement result. In the following description, an object may include TRP/cell/panel/beam.

Hereinafter, in relation to event-based reporting, an example of an event trigger condition (criteria) (or condition) will be described.

Event A1: When a measurement result for a serving object becomes better than a predetermined absolute threshold;

Event A2: When a measurement result for the serving object becomes worse than a predetermined absolute threshold;

Event A3: When a measurement result of a neighboring object becomes better than PCell/PSCell by a predetermined offset;

Event A4: When a measurement result for a neighboring object becomes better than a predetermined absolute threshold;

Event A5: When the measurement result for the PCell/PSCell becomes worse than the first absolute threshold value, and the measurement result for the neighbor object/SCell becomes better than the second absolute threshold value;

Event A6: When a measurement result of a neighboring object becomes better than SCell by a predetermined offset;

Conditional Event A3: When a conditional reset candidate is better than PCell/PSCell by a predetermined offset;

Conditional Event A5: When a measurement result for the PCell/PSCell becomes worse than the first absolute threshold value and the measurement result for the conditional reconfigure candidate becomes better than the second absolute threshold value;

Event I1: When interference rises above a predetermined threshold.

For event I1, the measurement report event is based on a cross link interference (CLI) measurement result, and the CLI measurement result may be derived based on SRS-RSRP or CLI-RSSI.

The scope of the present disclosure is not limited to the above event trigger conditions, and may be applied to conditions for triggering various events including the above exemplary events. In addition, the above exemplary event trigger condition may be defined based on the L3-based cell measurement value. According to the present disclosure, it may be defined based on an L1-based beam measurement value or an L1-based beam measurement value and an L3-based cell measurement value.

And, the UE may perform an operation of reporting the L3 (e.g., RRC layer) (i.e., measurement reporting operation) based measurement value to the base station based on the measurement configuration information (particularly, the reporting condition). Here, the L3-based measurement value may include a radio resource management (RRM) measurement value managed by L3. For example, the L3-based measurement value may include L3 signal quality (e.g., RSRP, RSRQ, or SINR) of RS for MO.

The base station may transmit a handover command message to the UE based on the measurement report information received from the UE. At this time, the handover command message may include RRC reconfiguration information. Specifically, the handover command message (or the RRC reconfiguration message included in the handover command message) may be generated by the target base station/cell and transmitted to the source base station/serving cell. And, the handover command message may be transmitted from the source base station/serving cell to the UE.

When the handover command message is received, the UE may perform a subsequent handover procedure. For example, the UE may perform a random access channel (RACH) operation to access the target cell based on the handover command message. In addition, the UE may transmit an RRC reconfiguration complete message indicating successful completion of RRC connection reconfiguration to the base station.

Here, the UE may report a CSI measurement value based on layer 1 (L1) (e.g., physical layer) to the base station for the purpose of changing TRP(transmission and reception point)/panel/beam within the same cell. In the case of the above-described L3-based measurement reporting operation (i.e., L3 signal quality information reporting operation), compared to the L1-based measurement reporting operation, signaling overhead is relatively large, and thus power consumption of the UE is higher.

In addition, in the case of the ultra-high frequency band, the coverage is small and irregular, and the channel fluctuation value is relatively large. When the L3-based handover procedure described above is performed as it is in the ultra-high frequency band having the above characteristics, Handover failure (HOF) may occur more frequently, and accordingly, there may be a need to frequently perform reporting of RRM measurement values. That is, in the case of an existing L3-based handover procedure, efficiency and robustness for UE mobility required in an environment in which an existing wireless system operates may not be secured.

Therefore, in the present disclosure, in order to solve the above problems, Handover event trigger conditions/criterion based on L1 information (i.e., beam quality values) as well as handover event trigger conditions/criterion based on existing L3 information (i.e., cell quality values) may be defined and the handover-related operations may be started.

Embodiment 1

The UE may perform a measurement reporting operation by utilizing handover event trigger condition(s)/criterion based on a beam quality value (e.g., L1-RSRP or L1-SINR).

Specifically, the existing cell quality value-based (i.e., L3-based) handover event trigger condition(s) may be replaced with a beam quality value-based (i.e., L1-based) handover event trigger condition (option 1). That is, the UE may determine whether the handover event trigger condition defined based on the beam quality value is satisfied for each MO.

As another example, a handover event trigger condition based on a beam quality value may be added/included (option 2) to an existing handover event trigger condition based on a cell quality value. That is, the UE may determine whether the handover event trigger condition defined based on the cell quality value and the beam quality value is satisfied for each MO.

Detailed operations of the base station and UE for each option will be described later.

Option 1

Option 1 means a method of replacing an L3-based cell quality value included in the existing report configuration information (e.g., ReportConfigNR IE) with an L1-based beam quality value. That is, option 1 is a method in which the UE checks whether the measurement result for each MO meets the handover event trigger condition defined based on the beam quality value.

For example, if option 1 is applied, the trigger condition/criterion of event A3 may be defined as a case where the optimal RS beam quality value for a neighboring cell is greater than the sum of the optimal RS beam quality value and the offset value (Here, the offset value may be configured to 0 or more) for the serving cell.

As an example with another option 1 applied, the handover event trigger criterion/condition may be defined as the optimal RS beam quality value for the serving cell being greater than or equal to a predefined (or specified) threshold or a threshold configured by the base station, or may be defined as a case in which the beam quality value of the optimal RS for another serving cell is worse than a predefined threshold value or a threshold value configured by the base station.

To apply option 1, the report quantity parameter among the reporting configuration information (e.g., ReportConfigNR IE) may be configured to include an L1-based quality value (e.g., L1-RSRP, L1-RSRQ or L1-SINR, etc.). And, the base station may indicate one of the L1-based quality values to the UE.

As another example, in order to apply option 1, an L1-based condition is additionally configured on the reporting configuration information, and the UE may determine whether the additionally configured L1-based condition is satisfied.

For example, the L1-based condition additionally configured on the report configuration information may include event A1-L1 (e.g., when the L1-based measurement result for the serving object is better than a predetermined absolute threshold value) or event A2-L1 (e.g., when the measurement result for the serving object becomes worse than a certain absolute threshold), but is not limited thereto.

When the existing handover event trigger condition is replaced from L3-based to L1-based, a handover-related procedure in which characteristics related to beam quality values are better reflected may be performed. However, since the beam quality value is information acquired during a short-term, the L1-based handover event trigger condition may be easier to satisfy than the existing L3-based handover event trigger condition. Accordingly, as an issue in which a handover operation is performed too frequently (i.e., a ping-pong issue) occurs, communication efficiency may deteriorate. A method for solving the above-described issue will be described in detail in Example 1-1 to be described later.

Option 2

Option 2 means a method of defining a handover event trigger condition including an L3-based cell quality value and an L1-based beam quality value. That is, option 2 is a method in which the UE checks whether the handover event trigger condition is satisfied based on the L3-based cell quality value and the L1-based beam quality value for each MO.

To apply option 2, a condition related to a beam quality value (i.e., an L1-based condition) may be included in an existing handover event trigger condition (i.e., an L3-based condition). When one or both of the L1-based condition and the L3-based condition are satisfied, a handover event may be triggered, and accordingly, the UE may perform a measurement reporting operation.

For example, in order to configure a handover event trigger condition considering both cell quality values and beam quality values for the serving cell and the neighboring cell (s), Event A3 may be defined as 'when the measurement result of the neighboring object is better than that of the PCell/PSCell by a predetermined offset' and 'when the beam quality of the neighboring object is better than that of the PCell/PSCell by a predetermined offset'.

As another example, condition(s) based on cell quality values and condition(s) based on beam quality values may be configured separately. When at least one of the two configured conditions is satisfied, the UE may perform a subsequent measurement reporting operation.

For example, when only one of the two conditions is satisfied for one or more MOs (e.g., when {Cell quality condition, beam quality condition}={satisfied, Unsatisfied} in MO#1 and {Cell quality condition, Beam quality condition}={Not satisfied, Satisfied} in MO#2), the UE may determine whether the handover trigger condition is satisfied in consideration of the priority of each condition and perform a subsequent operation accordingly.

Additionally or alternatively, a handover event trigger condition for each MO may be individually configured. Conventionally, a handover event trigger condition based on an L3-based cell quality value has been uniformly defined (or considered) for each MO(s). As an embodiment of the present disclosure, the base station may individually configure a handover event trigger condition for each MO. Specifically, the base station may configure a handover event trigger condition for each MO by selecting option 1, option 2, or one of the existing methods (i.e., handover event trigger condition configuration method based on L3-based cell quality value). The base station may select at least one of a cell quality value and a beam quality value, and transmit configuration information for reporting the selected quality value to the UE.

For example, it is assumed that 5 MOs are configured according to reporting configuration information transmitted from the base station to the UE. At this time, handover event trigger conditions may be individually configured for each of the five MOs. For example, option 1 is applied to MO#1 and MO#2, option 2 is applied to MO#3 and MO#4, and handover event based on existing cell quality values is applied to MO#1 and MO#5. A trigger condition may be applied.

At this time, the UE may not expect that handover event trigger condition configuration methods overlap for a specific MO or overlapping MOs for each configuration method. Alternatively, if the configuration methods of each handover event trigger condition are overlapped for MOs or MOs are overlapped for each setting method, a priority rule that is applied when all conditions according to the overlapped scheme are satisfied may be required. This will be described in detail in Embodiment 1-2 related to this.

Embodiment 1-1

Embodiment 1-1 is an embodiment related to a method for performing a measurement reporting operation by a UE when option 1 of embodiment 1 is applied (i.e., when the handover event trigger condition is defined as an L1-based beam quality value condition).

Specifically, when the handover event trigger condition using the L3-based cell measurement value is replaced with the L1-based beam measurement value as in option 1, a handover-related procedure in which characteristics related to beam quality values of the serving cell and neighboring cell(s) are better reflected may be performed.

However, when the beam quality values of the serving cell and the neighboring cell(s) are measured in short-term units, a fluctuation value of a beam quality value may increase, and accordingly, a ping-pong issue in which robustness for handover is reduced may occur.

In order to solve the above-mentioned ping-pong issue, the handover trigger condition additionally includes an L1-based beam quality value and a setting value related to the beam quality value (alternative (Alt) 1) or it may be determined whether an L1-based handover event trigger condition is satisfied during a specific time interval or based on a plurality of measurement sample units (alternative (Alt) 2). In addition, alternatives 1 and 2 may be selectively applied, but are not limited thereto, and alternatives 1 and 2 may be applied simultaneously.

Alternative 1

An L1-based beam quality value and a configuration value (e.g., a separate threshold value or offset value) may be additionally included in the handover trigger condition. Accordingly, the UE may determine whether the measured L1-based beam quality value satisfies the handover trigger condition additionally including a (separate) threshold value or offset value.

Specifically, in the existing measurement configuration information, threshold values and offset values configured for each event were defined based on L3-based cell quality values. When the handover trigger condition is defined based on the L1-based beam quality value, a separate configuration value (e.g., threshold-L1 or offset-L1, etc.) may be additionally configured. However, this is only one embodiment, and even if the handover trigger condition is defined based on the L1-based beam quality value, the existing threshold value and offset value configured for each event may be utilized as they are.

For example, a trigger condition according to the existing event A3 is defined as a case where a measurement result of a neighboring object is better than a PCell/PSCell by a predetermined offset. Here, when alternative 1 is applied to the trigger condition for the existing event A3, the trigger condition may be defined as a case where an optimal RS beam measurement value for a neighboring cell is greater than a sum of an optimal RS beam measurement value for a serving cell and a serving cell-specific/MO-specific offset value. At this time, the UE may receive the serving cell-specific/MO-specific offset value set as a separate L1-based value (e.g., offset-L1).

Additionally or alternatively, the offset value of the beam quality value may be changed based on the cell quality value. For example, when there is an L3-based cell quality value measured by the UE, a beam fluctuation value may be relatively low in a cell having a good cell quality value.

At this time, by configuring (or applying) the threshold value corresponding to the cell to a relatively low value or setting the offset value corresponding to the cell to a relatively high value, it may prevent a handover operation for the cell from occurring too frequently.

Accordingly, the beam quality value of the cell may be configured to be more robust to handover.

Here, a change value (i.e., delta value) of the offset/threshold value that varies according to the cell quality value and a range of the change value may be configured according to an RRC command message (e.g., measurement configuration).

Alternative 2

Alternative 2 refers to a method in which the UE determines whether the handover event trigger condition(s) is satisfied during a specific time period or based on a plurality of measurement sample units.

In the case of alternative 1, a handover event trigger condition may be defined based on configuration of a threshold value or an offset value for a beam quality value obtained according to a single measurement. At this time, since only a single measurement method may cause problems related to beam accuracy or handover robustness to the target cell, the UE may determine whether a handover event trigger condition is satisfied based on a specific time interval or a plurality of measurement samples.

For example, Alternative 2 may utilize a time-to-trigger (TTT) scheme (or operation) included in an existing handover procedure. The TTT method means a method of performing a corresponding subsequent procedure when a specific condition is repeated a predetermined number of times during a certain period of time, rather than immediately performing a corresponding subsequent procedure even when a specific condition is satisfied.

Specifically, when configured to perform the TTT scheme, the UE may not immediately perform a measurement reporting operation even if an event trigger condition (e.g., a specific L3-based event trigger condition) is satisfied. During a specific duration interval (i.e., report interval) (e.g., 10 ms) with the condition of when the event trigger condition is satisfied, the UE may check whether the same event trigger condition is continuously satisfied a specific number of times (i.e., report amount) (e.g., N times). During a specific interval, when the same event trigger condition is continuously satisfied a specific number of times, the UE may determine that the event is triggered and perform a subsequent measurement reporting operation.

That is, the UE may determine whether the handover event trigger condition is satisfied according to a value measured during a specific time interval or using a plurality of measurement samples.

Alternatively, if an event (e.g., event A3, etc.) occurs more than (consecutively) M (e.g., M<=N or M=N/2, etc.) during a certain period of time, the UE may be configured to determine that the event trigger condition is satisfied (i.e., configured to perform the TTT method). At this time, if it is determined that the condition related to the TTT scheme is also satisfied in other cells, the UE may give priority for handover to cells that satisfy the condition more during a specific time (i.e., reporting amount).

Embodiment 1-2

Embodiment 1-2 is an embodiment of a method for performing a measurement reporting operation by a UE when option 2 of embodiment 1 is applied.

Specifically, when the handover event trigger condition is defined based on the L1-based beam quality value and the L3-based cell quality value, or when option 1 and the existing L3-based method are configured to overlap in a specific MO(s), when a handover event is triggered, ambiguity may increase in relation to performing a measurement reporting operation.

For example, when the UE determines whether the handover event trigger condition is satisfied by considering both the L1-based beam quality value and the L3-based cell quality value, an L1-based condition may be satisfied, but an L3-based condition may not be satisfied, and vice versa. In the case of the existing L3-based handover method, the UE may convert beam quality values for the serving cell and neighboring cell(s) into cell quality values (e.g.. L3 filtering), and determine whether an L3-based condition is satisfied based on the converted cell quality values.

For example, a beam with the highest beam quality value and a beam with the fourth highest beam quality value (e.g., L1-RSRP, L-RSRQ, L1-SINR, etc.) may exist on the neighboring cell(s), and a beam with the second highest beam quality value and a beam with the third highest beam quality value may exist on the serving cell. At this time, the UE may convert beam quality values of each cell into cell quality values (e.g. L3 filtering result (averaging result)), and determine whether a handover trigger condition is satisfied based on the converted cell quality values. In this case, the converted cell quality value corresponding to the neighboring cell may not be greater than the converted cell quality value corresponding to the serving cell. Accordingly, a handover operation from the serving cell to the neighboring cell may not be performed.

That is, although the beam quality value of the neighboring cell is good, the existing L3-based condition may not be satisfied in terms of cell quality. Accordingly, the UE may determine that the handover event trigger condition is not satisfied, and handover latency may increase.

Accordingly, the UE may consider quality values related to conditions other than the priority condition instead of independently considering each of the L1-based and L3-based handover event trigger conditions in a state in which the first condition among the L1-based or L3-based handover event trigger conditions is satisfied.

Specifically, the UE may determine whether the handover event trigger condition for the L1-based beam quality value is satisfied in a state in which the condition for the L3-based cell quality value is satisfied (Method 1). Alternatively, the UE may determine whether the handover event trigger condition for the L3-based cell quality value is satisfied in a state in which the condition for the L1-based beam quality value is satisfied (method 2).

At this time, the UE may determine a configuration value (e.g., a threshold value or an offset value) corresponding to the subsequent condition based on the quality value related to the first condition, and the method related to this may be similar to Alternative 1 of Embodiment 1-1. For example, when the first condition is an L3-based condition, a configuration value corresponding to an L1-based condition, which is a subsequent condition, may be determined based on an L3-based cell quality value.

Methods 1 and 2 described above may be similarly applied to an evaluation method (e.g., a method of determining whether all of a plurality of (e.g., 2) event conditions are satisfied) in conditional handover (CHO). Conventionally, from the L3 point of view, after the first event of the first event and the second event is satisfied, the measurement reporting operation may be triggered at the time point when the second event is satisfied within a specific interval. When Method 1 and Method 2 are applied, both events do not have an L3-based condition, but an evaluation operation may be performed in which one event is determined from the L1 (or L3) point of view and the other event is determined from the L3 (or L1) point of view.

Alternatively, the handover event trigger condition may be configured based on the ranking of the beam quality value and the cell quality value, instead of determining whether the handover event trigger condition is satisfied in a sequential manner as in the methods 1 and 2.

Specifically, the UE may determine the rank value of the beam quality value and the rank value of the cell quality value for each of the serving cell and the neighboring cell. The UE may identify a cell to perform handover (i.e., the highest ranked cell) based on a simple sum of the identified rank values or a value derived by a specific formula, and may perform a related measurement reporting operation related to the identified cell.

For example, it may be assumed that for a total of 5 cells {MO #1, MO #2, MO #3, MO #4, MO #5}, the beam quality ranking values are {1, 5, 3, 2, 4} in order, and the cell quality ranking values are {3, 2, 1, 4, 5} in order. At this time, a simple summation of the beam quality rank value and the cell quality rank value becomes {4, 7, 4, 6, 9}. The UE may check whether the handover event trigger condition is satisfied for the first and third cells having the highest rank value. Whether or not the handover event trigger condition is satisfied may be performed based on the above methods.

That is, when the condition based on the beam quality value is replaced/added/included on the handover event trigger condition, when the UE performs a measurement reporting operation based on the handover event trigger condition being met, as described in Embodiment 1 above, the UE may report the beam quality value(s) (according to the configuration of the base station) or may report the cell quality value for the corresponding cell.

At this time, a wireless system to which the present disclosure may be applied is likely to experience more frequent channel environment fluctuations, Signaling latency and overhead aspects may be considered. Accordingly, when the handover event trigger condition is satisfied, when reporting measurement information to the base station, the UE may perform an operation of preferentially reporting the beam quality value in terms of L1 to the base station without going through L3.

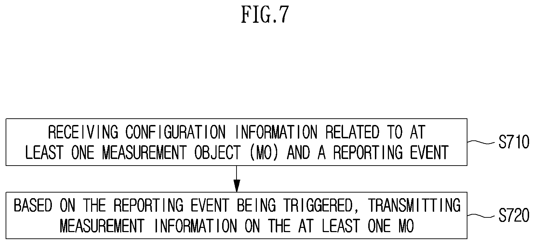

FIG. 7 is a diagram for describing an operation of transmitting measurement information of a UE according to an embodiment of the present disclosure.

The UE may receive configuration information related to one or more measurement objects (MOs) and reporting events from the base station (S710).

Here, MO indicates an object to be measured within the same frequency (i.e., intra-frequency) or between frequencies (i.e., inter-frequency). For example, the MO may include the SS/PBCH block or CSI-RS resource to be measured (in particular, the time and frequency location of the SS/PBCH block or CSI-RS).

The reporting event refers to an event in which measurement information on one or more measurement objects is reported to the base station. Measurement information may include one of L1-parameters or L3-parameters of one or more objects. The L1-parameter for the MO may include an L1-based beam quality value (e.g., at least one of L1-RSRQ, L1-RSRP, or L1-SINR). And, the L3-parameter for the MO may include an L3-based cell quality value.

The configuration information related to reporting events may include at least one of information on the conditions for triggering the reporting event, information necessary to determine whether the conditions for triggering the reporting event have been satisfied, or the type of measurement information to be reported to the base station (e.g., L1-parameters or L3-parameters).

For example, information necessary to determine whether a condition for triggering a reporting event has been satisfied may include at least one of time interval information to determine whether a condition has been satisfied, measurement occasion information, or offset or threshold information related to the condition.

Here, conditions for triggering the reporting event for each one or more MOs may be configured separately (or independently) . For example, it is assumed that one or more MOs include a first MO and a second MO. A condition for triggering a reporting event for the first MO may be configured based on the first L1-measured value, and a condition for triggering a reporting event for the second MO may be configured based on the first L1-measured value and the third L1-measured value.

A condition for triggering a reporting event may be configured based on an L1 (layer 1)-measured value, but is not limited thereto, and may be configured based on an L1-measured value and an L3-measured value.

As an embodiment of the present disclosure, it is assumed that a condition for triggering a reporting event is configured based on an L1-measured value.

For example, when the L1-measurement value of one or more MOs is greater than the L1-measurement value of the serving object, or if the L1-measurement value of one or more MOs is greater than the L1-measurement value of the serving object by a predetermined offset value or more, a reporting event may be triggered. At this time, a predetermined offset value may be predefined or configured based on the L3-measured value. And, a serving object may mean a time or frequency resource included in a serving cell.

And, during a specific time period, the UE may determine whether the condition for triggering the reporting event is satisfied a predefined number of times based on the L1-parameter measured for one or more MOs.

For example, when a condition for triggering a reporting event is satisfied more than a predefined number of times during a specific time period (e.g., 10 ms), the UE may determine that the reporting event is triggered and perform a subsequent procedure.

Additionally or alternatively, it is assumed that the condition for triggering the reporting event is configured based on the L1-measured value and the L3-measured value.

As an embodiment, the UE may determine whether one of a condition related to an L1-measured value or a condition related to an L3-measured value is satisfied for one or more MOs. And, based on whether one of the conditions related to the L1-measured value or the condition related to the L3-measured value is satisfied, for one or more MOs, the UE may determine whether another one of a condition related to an L1-measured value or a condition related to an L3-measured value is satisfied. That is, the UE may sequentially determine whether a condition related to the L1-measured value or a condition related to the L3-measured value is satisfied.

As another embodiment, the UE may determine one or more specific MOs to which a condition for triggering a reporting event is applied based on L1-parameter ranks and L3-parameter ranks for one or more MOs.

For example, the UE may determine the sum of L1-parameter ranks and L3-parameter ranks for one or more MOs. And, the UE may determine whether the trigger condition of the reporting event is satisfied for the MO having the highest sum value.

Based on the reporting event being triggered, the UE may transmit measurement information on one or more MOs to the base station (S820). The measurement information may include at least one of L1-parameters or L3-parameters for one or more according to the configuration of the base station.

Based on the measurement information for one or more MOs, the UE may receive a command for performing handover to the target cell from the base station. Here, the target cell may be a cell including an MO corresponding to the measurement information transmitted to the base station, but is not limited thereto. The UE may perform handover to the target cell based on the received command. When the handover operation is completed, the UE may transmit a message indicating that the handover has been successfully completed to the base station.

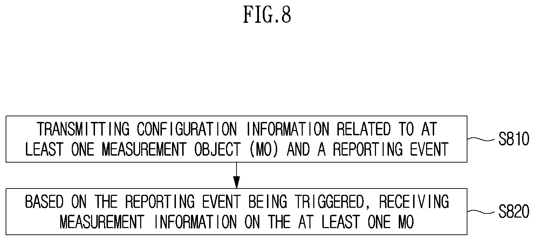

FIG. 8 is a diagram for describing an operation of receiving measurement information of a base station according to an embodiment of the present disclosure.

The base station may transmit configuration information related to one or more measurement objects (MOs) and reporting events to the UE (S810).

Here, since the MO, the reporting event, and the configuration information related to the reporting event have been specifically described with reference to FIG. 7, duplicate descriptions will be omitted.

The base station may separately (or independently) configure conditions for triggering the reporting event for each one or more MOs. For example, it is assumed that one or more MOs include a first MO and a second MO. A condition for triggering a reporting event for the first MO may be configured based on the first L1-measured value, and a condition for triggering a reporting event for the second MO may be configured based on the first L1-measured value and the third L1-measured value.

A condition for triggering a reporting event may be configured based on an L1 (layer 1)-measured value, but is not limited thereto, and may be configured based on an L1-measured value and an L3-measured value.

Based on a reporting event being triggered, the base station may receive measurement information on one or more MOs from the terminal (S820). The measurement information may include at least one of L1-parameters or L3-parameters for one or more according to the setting of the base station.

Based on the measurement information for one or more MOs, the base station may transmit a command for performing handover to the target cell to the UE. Here, the target cell may be a cell including an MO corresponding to the measurement information transmitted to the base station, but is not limited thereto. The UE may perform a handover operation based on a command received from the base station. When the handover operation is completed by the UE, the base station may receive a message indicating that the handover has been successfully completed from the UE.

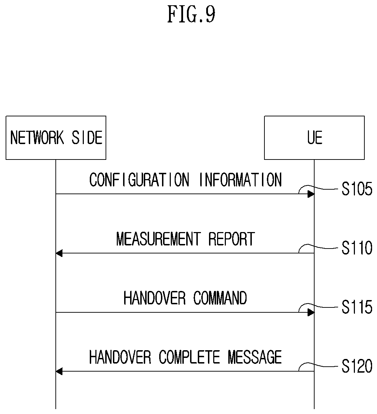

FIG. 9 is a diagram for describing a signaling procedure of a network side and a terminal according to the present disclosure.

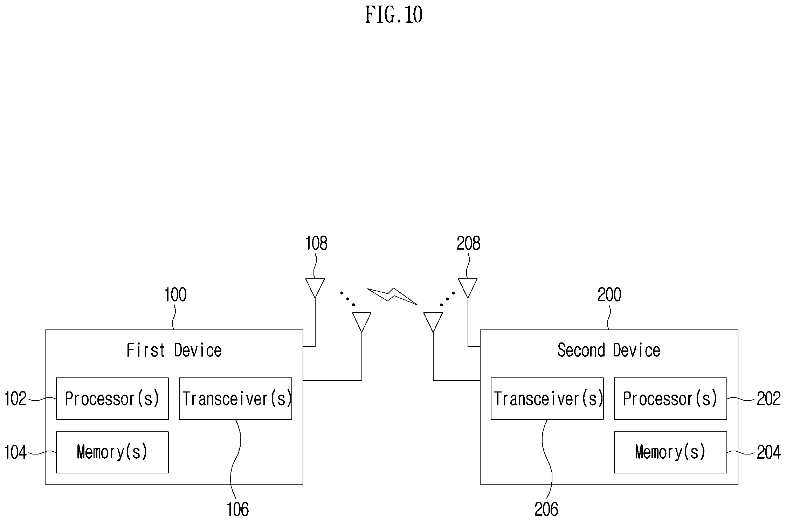

FIG. 9 illustrates an example of signaling between a network side and a terminal (UE) in a situation to which the above-described examples of the present disclosure (e.g., Embodiment 1, Embodiment 1-1, Embodiment 1-2, or a combination of one or more of sub-embodiments) may be applied. Here, the UE/network side is exemplary and may be applied to various devices as described with reference to FIG. 10. FIG. 10 is for convenience of description and does not limit the scope of the present disclosure. In addition, some step(s) shown in FIG. 10 may be omitted depending on circumstances and/or configurations. In addition, in the operation of the network side/UE of FIG. 10, the above-described uplink transmission/reception operation may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, the description below is described on the condition of multiple TRPs, but this may be equally extended and applied to transmission through multiple panels/cells, and may also be extended and applied to transmission through multiple RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID). In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.). In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information through/by using TRP1 and/or TRP2 from a network side S105. The configuration information may include information related to network-side configuration (i.e., TRP configuration), resource allocation information related to multiple TRP-based transmission and reception, and the like. In this case, the configuration information may be transmitted through higher layer signaling (e.g., RRC signaling, MAC-CE, etc.). In addition, when the configuration information is predefined or configured, the corresponding step may be omitted.

For example, as in the above-described embodiment (e.g., Embodiment 1, Embodiment 1-1, Embodiment 2, or a combination of one or more of the sub-embodiments), the configuration information may include at least one of a handover event trigger condition based on a beam quality value (e.g., L1-RSRP, L1-SINR, etc.), information for determining whether a handover event has occurred (e.g., threshold value, offset value, time period information, measurement opportunity information, etc.), and/or information related to priority.

The above-described step S105 may correspond to an RRC reconfiguration (measurement configuration) step. And, for example, the above-described operation of the UE (100 or 200 in FIG. 10) receiving the configuration information from the network side (200 or 100 in Fig. 10) in step S105 may be implemented by the device of FIG. 10 to be described below. For example, referring to Figure 10, one or more processors 102 may control one or more transceivers 106 and/or one or more memories 104 to receive the configuration information, and one or more transceivers 106 may receive the configuration information from a network side.

The UE may perform a measurement reporting operation to the network side (S110). For example, based on a handover event trigger condition being satisfied, the UE may transmit measurement report information including at least one of L1-parameters and L3-parameters for one or more MOs to the network side.

Here, the handover event trigger condition may be configured based on at least one of an L1-measured value and an L3-measured value. For example, the handover event trigger condition may be configured to a case where the L1-measurement value for one or more MOs is greater than the sum of the L1-measurement value for the serving object and a predetermined offset value. However, this is only an example, and handover event trigger conditions may be configured in various ways.

The above-described step S110 may correspond to an RRC reconfiguration completion step performed in response to the RRC reconfiguration message. For example, an operation in which the UE (100 or 200 in FIG. 10) transmits measurement information to the network side (200 or 100 in FIG. 10) in step S110 may be implemented by the device of FIG. 10 to be described below. For example, referring to Figure 10, one or more processors 102 may control one or more transceivers 106 and/or one or more memories 104 to transmit the measurement information, and the one or more transceivers 106 may transmit the measurement information to a network side.

The network side may transmit a handover command to the UE (S115). Specifically, the network side may transmit a handover command to the UE based on the measurement information received from the UE.

At this time, the handover command may be generated by the target base station/cell and transmitted to the source base station/serving cell. And, the handover command (or the RRC reconfiguration message included in the handover command) may be transmitted to the UE by the source base station/serving cell.

For example, an operation in which the network side (100 or 200 of FIG. 10) transmits a handover command to the UE in step S115 described above may be implemented by the device of FIG. 10. For example, referring to FIG. 10, one or more processors 102 may control one or more memories 104 or the like to transmit a handover command to the UE.

The UE may transmit the handover complete message to the network side (S120). Step S120 may correspond to a step of transmitting an RRC reconfiguration complete message (handover success message).

For example, the step of transmitting a handover complete message may be performed based on the above-described embodiment (e.g., for example, Embodiment 1, Embodiment 1-1, Embodiment 1-2, or a combination of one or more of the sub-embodiments).

For example, the above-described operation of transmitting a handover complete message from the UE (100/200 in Fig. 10) to the network side (100/200 in FIG. 10) in step S120 may be implemented by the device of FIG. 10 to be described below. For example, referring to FIG. 10, One or more processors 102 may control one or more transceivers 106 and/or one or more memories 104 to transmit a handover complete message, and the one or more transceivers 106 may transmit a handover complete message to the network side.

General Device to which the Present Disclosure may be applied

FIG. 10 is a diagram which illustrates a block diagram of a wireless communication system according to an embodiment of the present disclosure.

In reference to FIG. 10, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of devices 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR R_AM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a devices 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in devices 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in devices 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to transmit measurement information in a wireless communication system, the method comprising:

   receiving, from a base station, configuration information related to at least one measurement object (MO) and a reporting event; and
   based on the reporting event being triggered, transmitting, to the base station, measurement information for the at least one MO,
   wherein a condition for triggering the reporting event is configured based on an L1(layer 1)-measurement value.

2. The method of claim 1, wherein:
   based on the measurement information for the at least one MO, a command for performing handover to a target cell is received from the base station.

3. The method of claim 1, wherein:
   the measurement information includes at least one of an L1-parameter or an L3-parameter for at least one MO for which the condition for triggering the reporting event is satisfied.

4. The method of claim 1, wherein:
   based on the L1-measurement value for the at least one MO being greater than a sum of an L1-measurement value for a serving object and a predetermined offset value, the reporting event is triggered.

5. The method of claim 4, wherein:
   the predetermined offset value is predefined or configured based on an L3-measurement value.

6. The method of claim 1, wherein the method further comprising:
   determining whether the condition for triggering the reporting event is satisfied a predefined number of times based on an L1-parameter measured for the at least one MO.

7. The method of claim 1, wherein:
   the condition for triggering the reporting event includes a condition related to the L1-measurement value and a condition related to the L3-measurement value.

8. The method of claim 7, wherein the method further comprising:

   determining whether one of the condition related to the L1-measurement value or the condition related to the L3-measured value is satisfied for at least one MO, and
   based one of the condition related to the L1-measurement value or the condition related to the L3-measurement value being satisfied, for at least one MO, determining whether another one of the condition related to the L1-measurement value or the condition related to the L3-measurement value is satisfied.

9.  The method of claim 1, wherein the method further comprising:
    determining at least one specific MO to which the condition for triggering the reporting event is applied based on an L1-parameter rank and an L3-parameter rank for the at least one MO.

10. The method of claim 1, wherein:
    the condition for triggering the reporting event is configured separately for each of the at least one MO.

11. The method of claim 10, wherein:

    the at least one MO includes a first MO and a second MO,
    a condition for triggering a reporting event for the first MO is configured based on the L1-measurement value, and
    a condition for triggering a reporting event for the second MO is configured based on the L1-measurement value and an L3-measurement value.

12. The method of claim 1, wherein:
    the at least one MO includes at least one of a channel state information (CSI)-reference signal (RS) resource or a synchronization signal (SS) / physical broadcast channel (PBCH).

13. A user equipment (UE) for transmitting measurement information in a wireless communication system, the UE comprising:

    at least one transceiver; and
    at least one processor connected to the at least one transceiver,
    wherein the processor is configured to:

    receive, from a base station, configuration information related to at least one measurement object (MO) and a reporting event through the at least one transceiver; and
    based on the reporting event being triggered, transmit, to the base station, measurement information for the at least one MO through the at least one transceiver,

    wherein a condition for triggering the reporting event is configured based on an L1(layer 1)-measurement value.

14. A method for receiving measurement information by a base station in a wireless communication system, the method comprising:

    transmitting, to a user equipment (UE), configuration information related to at least one measurement object (MO) and a reporting event; and
    based on the reporting event being triggered, receiving, to the UE, measurement information for the at least one MO,
    wherein a condition for triggering the reporting event is configured based on an L1(layer 1)-measurement value.

15. A base station for receiving measurement information in a wireless communication system, the base station comprising:

    at least one transceiver; and
    at least one processor connected to the at least one transceiver,
    wherein the processor is configured to:

    transmit, to a user equipment (UE), configuration information related to at least one measurement object (MO) and a reporting event through the at least one transceiver; and
    based on the reporting event being triggered, receive, to the UE, measurement information for the at least one MO through the at least one transceiver,
    wherein a condition for triggering the reporting event is configured based on an L1(layer 1)-measurement value.

16. A processing device configured to control a user equipment (UE) to transmit measurement information in a wireless communication system, the processing device comprising:

at least one processor; and
at least one computer memory operatively coupled to the at least one processor and storing instructions for performing operations upon being executed by the at least one processor,

wherein the operations comprise:

receiving, from a base station, configuration information related to at least one measurement object (MO) and a reporting event; and
based on the reporting event being triggered, transmitting, to the base station, measurement information for the at least one MO,
wherein a condition for triggering the reporting event is configured based on an L1(layer 1)-measurement value.

17. At least one non-transitory computer readable medium storing at least one instruction, wherein:
the at least one instruction executed by at least one processor controls a device which transmits measurement information in a wireless communication system to perform:

receiving, from a base station, configuration information related to at least one measurement object (MO) and a reporting event; and
based on the reporting event being triggered, transmitting, to the base station, measurement information for the at least one MO,
wherein a condition for triggering the reporting event is configured based on an L1(layer 1)-measurement value.

FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

# FIG.6

INITIAL CELL
SEARCH

SYSTEM
INFORMATION
RECEPTION

RANDOM ACCESS PROCEDURE

GENERAL DL/UL Tx/Rx

| PSS/SSS&<br>[DLRS]&<br>PBCH | PDCCH/<br>PDSCH<br>(BCCH) | PRACH | PDCCH/<br>PDSCH | PUSCH | PDCCH/<br>PDSCH | PDCCH/<br>PDSCH | PUSCH/<br>PUCCH |

S601   S602   S603   S604   S605   S606   S607   S608

· DL/UL ACK/NACK
· UE CQI/PMI RI REPORT
  USING PUSCH AND PUCCH

FIG.7

| RECEIVING CONFIGURATION INFORMATION RELATED TO AT LEAST ONE MEASUREMENT OBJECT (MO) AND A REPORTING EVENT | ~ S710 |

| BASED ON THE REPORTING EVENT BEING TRIGGERED, TRANSMITTING MEASUREMENT INFORMATION ON THE AT LEAST ONE MO | ~ S720 |

FIG.8

| TRANSMITTING CONFIGURATION INFORMATION RELATED TO AT LEAST ONE MEASUREMENT OBJECT (MO) AND A REPORTING EVENT | S810 |

| BASED ON THE REPORTING EVENT BEING TRIGGERED, RECEIVING MEASUREMENT INFORMATION ON THE AT LEAST ONE MO | S820 |

FIG.9

EP 4 224 931 A1

# FIG.10

## INTERNATIONAL SEARCH REPORT

| International application No. |
| --- |
| **PCT/KR2021/013359** |

| A. | CLASSIFICATION OF SUBJECT MATTER |
| --- | --- |
| | **H04W 36/00**(2009.01)i; **H04W 36/30**(2009.01)i; **H04W 16/28**(2009.01)i |

According to International Patent Classification (IPC) or to both national classification and IPC

| B. | FIELDS SEARCHED |
| --- | --- |

Minimum documentation searched (classification system followed by classification symbols)

H04W 36/00(2009.01); H04B 17/00(2006.01); H04B 7/06(2006.01); H04W 24/02(2009.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 측정 객체(measurement obejct), 보고 이벤트(reporting event), layer 1, 핸드오버 (handover)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| DY | 3GPP; TSG RAN; NR; RRC protocol specification (Release 16). 3GPP TS 38.331 V16.1.0 (July 2020). 24 July 2020. <br> See section 5.5.1. | 1-17 |
| Y | WO 2020-164592 A1 (VIVO MOBILE COMMUNICATION CO., LTD.) 20 August 2020 (2020-08-20) <br> See claims 1-8. | 1-17 |
| Y | KR 10-2015-0035760 A (LG ELECTRONICS INC.) 07 April 2015 (2015-04-07) <br> See paragraphs [0193]-[0199]; and claims 2-7. | 6 |
| A | US 2019-0327629 A1 (HUAWEI TECHNOLOGIES CO., LTD.) 24 October 2019 (2019-10-24) <br> See paragraphs [0073]-[0114]; and figure 6. | 1-17 |
| A | US 2014-0247741 A1 (SHARP LABORATORIES OF AMERICA, INC.) 04 September 2014 (2014-09-04) <br> See paragraph [0128]; and figure 12. | 1-17 |

| ☐ Further documents are listed in the continuation of Box C. | ☑ See patent family annex. |
| --- | --- |

| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| --- | --- |

| Date of the actual completion of the international search | Date of mailing of the international search report |
| --- | --- |
| **03 January 2022** | **05 January 2022** |

| Name and mailing address of the ISA/KR <br><br> **Korean Intellectual Property Office** <br> **Government Complex-Daejeon Building 4, 189 Cheongsa-ro, Seo-gu, Daejeon 35208** | Authorized officer |
| --- | --- |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/013359**

| Patent document cited in search report | | | Publication date (day/month/year) | Patent family member(s) | | | Publication date (day/month/year) |
|---|---|---|---|---|---|---|---|
| WO | 2020-164592 | A1 | 20 August 2020 | CN | 111436059 | A | 21 July 2020 |
| | | | | EP | 3927003 | A1 | 22 December 2021 |
| | | | | US | 2021-0377765 | A1 | 02 December 2021 |
| KR | 10-2015-0035760 | A | 07 April 2015 | KR | 10-2015-0035759 | A | 07 April 2015 |
| | | | | US | 2015-0146561 | A1 | 28 May 2015 |
| | | | | US | 2015-0195731 | A1 | 09 July 2015 |
| | | | | US | 9326178 | B2 | 26 April 2016 |
| | | | | US | 9420487 | B2 | 16 August 2016 |
| | | | | WO | 2014-003506 | A1 | 03 January 2014 |
| | | | | WO | 2014-003508 | A1 | 03 January 2014 |
| US | 2019-0327629 | A1 | 24 October 2019 | CA | 3040355 | A1 | 19 April 2018 |
| | | | | CN | 108605236 | A | 28 September 2018 |
| | | | | CN | 113596906 | A | 02 November 2021 |
| | | | | EP | 3528530 | A1 | 21 August 2019 |
| | | | | EP | 3528530 | A4 | 25 December 2019 |
| | | | | EP | 3528530 | B1 | 08 September 2021 |
| | | | | JP | 2019-532586 | A | 07 November 2019 |
| | | | | KR | 10-2019-0062550 | A | 05 June 2019 |
| | | | | KR | 10-2021-0076196 | A | 23 June 2021 |
| | | | | KR | 10-2267907 | B1 | 21 June 2021 |
| | | | | WO | 2018-068260 | A1 | 19 April 2018 |
| US | 2014-0247741 | A1 | 04 September 2014 | CN | 104303544 | A | 21 January 2015 |
| | | | | CN | 104303544 | B | 08 March 2019 |
| | | | | EP | 2832141 | A1 | 04 February 2015 |
| | | | | EP | 2832141 | A4 | 18 November 2015 |
| | | | | JP | 2015-511778 | A | 20 April 2015 |
| | | | | JP | 6185476 | B2 | 23 August 2017 |
| | | | | US | 2013-0260741 | A1 | 03 October 2013 |
| | | | | US | 8767581 | B2 | 01 July 2014 |
| | | | | US | 9167469 | B2 | 20 October 2015 |
| | | | | WO | 2013-145533 | A1 | 03 October 2013 |

Form PCT/ISA/210 (patent family annex) (July 2019)